(19) Europäisches Patentamt

European Patent Office

Office européen des brevets

(11) **EP 2 842 425 A1**

(12) **EUROPÄISCHE PATENTANMELDUNG**

(43) Veröffentlichungstag:
04.03.2015 Patentblatt 2015/10

(21) Anmeldenummer: 13182078.9

(22) Anmeldetag: **28.08.2013**

(51) Int Cl.:
*A01N 43/80* [(2006.01)]     *A01N 47/44* [(2006.01)]
*A01P 1/00* [(2006.01)]     *A01P 3/00* [(2006.01)]

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **LANXESS Deutschland GmbH
50569 Köln (DE)**

(72) Erfinder:
• **Wachtler, Dr. Peter
47800 Krefeld (DE)**
• **Gerharz, Dr. Tanja
40599 Düsseldorf (DE)**

(54) **Mikrobizide Mittel**

(57) Gegenstand der vorliegenden Anmeldung sind biozide Mittel enthaltend zumindest ein Isothiazolinon aus der Gruppe bestehend aus 1,2-Benzisothiazolin-3-on (BIT) und 2-Methyl-4-isothiazolin-3-on (MIT) sowie zumindest ein N-Alkyl-Guanidiniumsalz, Verfahren zu deren Herstellung sowie ihre Verwendung zum Schutz von technischen Materialien und Produkten, die von Mikroorganismen befallen werden können.

EP 2 842 425 A1

**Beschreibung**

Gegenstand der vorliegenden Anmeldung sind biozide Mittel enthaltend zumindest ein Isothiazolinon aus der Gruppe bestehend aus 1,2-Benzisothiazolin-3-on (BIT) und 2-Methyl-4-isothiazolin-3-on (MIT) sowie zumindest ein N-Alkyl-Guanidiniumsalz, Verfahren zu deren Herstellung sowie ihre Verwendung zum Schutz von technischen Materialien und Produkten, die von Mikroorganismen befallen werden können.

N-Alkylguanidinsalze verfügen über gute bakterizide Wirksamkeit, gute Wirkgeschwindigkeit und sind sehr gut wasserlöslich. Allerdings kann es beim Einsatz größerer Mengen von N-Alkylguanidiniumsalzen zur Schaumbildung kommen, wodurch der Einsatz erschwert bzw. unmöglich gemacht wird. Weiterhin können in der Praxis zur Erzielung zufriedenstellender Ergebnisse in manchen Fällen sehr hohe Dosiermengen notwendig. Weiterhin kann die hohe Wasserlöslichkeit für Anwendungen im Aussenbereich nachteilig sein, da die Bewitterung schnell zur Auswaschung führt.

Aus US 4,661,503 sind synergistische Mischungen Dodecylguanidinium-hydrochlorid mit einer Mischung aus 5-Chlor-2-methyl-4-isothiazolin-3-on (CMIT) und MIT in einem Gewichtsverhältnis von etwa 3 zu 1, die gute Wirkung gegen Bakterien und Pilze aufweisen soll. Es ist jedoch wünschenswert solche Mischungen weiter zu verbessern.

BIT und seine Salze wie insbesondere seine Natrium-, Kalium- und Lithiumsalze sind seit langem in der Praxis verwendete Wirkstoffe zur Herstellung mikrobizid wirksamer Formulierungen. BIT zeichnet sich durch eine gute chemische und thermische Stabilität aus und verfügt grundsätzlich über eine breite antimikrobielle Wirkung (Bakterien, Pilze, Hefen). Allerdings ist die Wirksamkeit gegen bestimmte Bakterienarten nicht immer zufriedenstellend und die beobachtete Wirkgeschwindigkeit häufig zur Vermeidung mikrobiologisch induzierter Materialschäden nicht ausreichend.

Zur Verbesserung der Wirksamkeit und Effizienz von BIT ist zum Beispiel aus EP 1 005 271 A1 bekannt, MIT und gegebenenfalls weitere Biozide wie zum Beispiel Formaldehyd oder Formaldehyd freisetzende Substanzen zuzugeben.

Aber auch für solche Mischungen ist eine Verbesserung des Wirkungsspektrums, der Wirkgeschwindigkeit oder der insgesamt einzusetzenden Menge an Bioziden wünschenswert.

Es wurden nun biozide Mittel gefunden die enthalten

(a) zumindest ein Isothiazolinon aus der Gruppe bestehend aus 1,2-Benzisothiazolin-3-on und 2-Methyl-4-isothiazolin-3-on und

(b) zumindest ein N-Alkyl-Guanidiniumsalz,
wobei, sofern die biozide Mittel als Komponente (a) nur 2-Methyl-4-isothiazolin-3-on enthält, die biozide Mittel weiterhin entweder

• kein 5-Chlor-2-methyl-4-isothiazolin-3-on enthält oder

• 5-Chlor-2-methyl-4-isothiazolin-3-on enthält, wobei dann das Gewichtsverhältnis von 2-Methyl-4-isothiazolin-3-on zu 5-Chlor-2-methyl-4-isothiazolin-3-on mindestens 0,35: 1, vorzugsweise mindestens 1:1, wie beispielsweise 1:1 bis 1000:1, besonders bevorzugt mindestens 2:1, wie beispielsweise 2:1 bis 1000:1, ganz besonders bevorzugt mindestens 10:1, wie beispielsweise 10:1 bis 1000:1 und noch weiter bevorzugt mindestens 50:1, wie beispielsweise 50:1 bis 1000:1 beträgt.

Der Rahmen der Erfindung umfasst neben den genannten Bereichen und Vorzugsbereichen von Formeln und Parametern auch beliebige Kombinationen davon, selbst wenn sie aus praktischen Gründen nachstehend nicht vollständig explizit aufgeführt sind.

Die erfindungsgemäßen Mischungen weisen eine starke Wirkung gegen Mikroorganismen wie Bakterien, Pilze, Hefen und Algen auf und können zum Schutz von technischen Materialien gegen Befall und Zerstörung durch Mikroorganismen eingesetzt werden.

Unter N-Alkyl-Guanidiniumsalzen werden erfindungsgemäß Verbindungen verstanden, die zumindest eine Guanidiniumgruppe oder Biguanidgruppe aufweisen, die an zumindest einem ihrer Stickstoff-Atome einen Alkyl-Rest aufweisen oder Verbindungen, in denen jeweils zwei Gruppen ausgewählt aus Guanidiniumgruppen und Biguanidgruppen über zumindest jeweils eines ihrer Stickstoffatome über einen Alkylenrest verknüpft sind. Beispiele für Verbindungen der letzteren Art umfassen Chlorhexidin und Polyhexanid.

Bevorzugte N-Alkyl-Guanidiniumsalze sind solche der Formel (I)

$$[H_2N\text{-}(C=NH_2)\text{-}NH\text{-}R]^+ X^- \qquad (I)$$

in der R für einen $C_8$-$C_{18}$ Alkylrest und X für ein monovalentes Anion oder 1/p Äquivalente eines p-valenten Anions steht, wobei p für eine natürliche Zahl von 2 oder mehr steht.

R     steht bevorzugt für n-Dodecyl.

X⁻    steht bevorzugt für Formiat, Acetat, Nitrat, Halogenid wie beispielsweise Chlorid oder Bromid

Besonders bevorzugte Verbindungen der Formel (I) sind n-Dodecylguanidiniumacetat und n-Dodecylguanidiniumchlorid.

Bevorzugte biozide Mittel enthalten als Komponente (a) 1,2-Benzisothiazolin-3-on und 2-Methyl-4-isothiazolin-3-on.

Die relativen Verhältnisse der Komponenten (a) und (b) können in den erfindungsgemäßen Mischungen über einen weiten Bereich variiert werden.

Beispielsweise beträgt das Gewichtserhältnis der Komponenten (a) und (b) zueinander beispielsweise 10:1 bis 1:10 vorzugsweise 5:1 bis 1:5 und besonders bevorzugt 2:1 bis 1:5.

Sofern BIT und MIT als Komponente (a) eingesetzt werden beträgt deren Gewichtsverhältnis beispielsweise 1:100 bis 100:1, vorzugsweise 3:1 bis 1:3 und besonders bevorzugt 1,5:1 bis 1:2,5.

Die erfindungsgemäßen Mittel eignen sich hervorragend als Konservierungsmittel für technische Materialien. Der Begriff "Technischen Materialien" umfasst im Allgemeinen, jedoch ohne Limitierung darauf, folgende Materialien und Produkte:

- Anstrichmittel, Farben, Putze und sonstige Beschichtungsmittel

- Stärkelösungen und -slurrys oder andere auf Basis von Stärke hergestellte Produkte wie z.B. Druckverdicker

- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.

- Bauchemische Produkte wie Betonaddita beispielsweise auf Basis von Melasse, Ligninsulfonat oder Polyacrylaten, Bituimenemulsionen oder Fugendichtungsmassen

- Leime oder Klebstoffe auf Basis der bekannten tierischen, pflanzlichen oder synthetischen Rohstoffe

- Polymerdispersionen auf Basis von z.B. Polyacrylat, Polystyrolacrylat, Styrolbutadien, Polyvinylacetat u.a.

- Detergentien und Reinigungsmittel für den technischen und Haushaltsbedarf

- Mineralöle und Mineralölprodukte (wie z.B. Dieselkraftstoffe)

- Kühlschmierstoffe zur Metallverarbeitung auf Basis von Mineralöl-haltigen, halbsynthetischen oder synthetischen Konzentraten

- Hilfsmittel für die Leder-, Textil- oder photochemische Industrie

- Vor- und Zwischenprodukte der chemischen Industrie, z.B. bei der Farbstoff-produktion und -lagerung

- Tinten oder Tuschen

- Wachs und Tonemulsionen

Bevorzugt handelt es sich bei den technischen Materialien um:

- Stärke-lösungen und -slurrys oder andere auf Basis von Stärke hergestellte Produkte wie z.B. Druckverdicker

- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.
Besonders bevorzugt handelt es sich bei den technischen Materialien um:

- Slurrys von anorganischen Füllstoffen und Pigmenten wie Kaolin, Calciumcarbonat, Gips, Bentonit, Magnesium Silikate, Smectid oder Talkum, wobei Slurries von Calciumcarbonat noch weiter bevorzugt sind.

Die erfindungsgemäßen Mittel können besonders effizient in einem Verfahren zum Schutz technischer Materialien vor Befall mit und/oder Zerstörung durch Mikroorganismen eingesetzt werden. Sie sind insbesondere wirksam gegen Bakterien, Pilze und Schleimorganismen Beispielhaft seien die folgenden Mikroorganismen genannt:

Bakterien:

Alcaligenes wie Alcaligenes faecalis, Bacillus wie Bacillus subtilis, Citrobacter wie Citrobacter freundii, Corynebacter wie Corynebacterium ammoniagenes, Enterobacter wie Enterobacter aerogenes, Enterococcus wie Enterococcus hirae, Escherichia wie Escherichia coli, Proteus wie Proteus hauseri

Pseudomonas wie Pseudomonas aeruginosa, Pseudomonas fluorescens oder Pseudomonas stutzeri, Salmonella, wie Salmonella enterica, Staphylococcus wie Staphylococcus aureus;

Pilze:

Acremonium wie Acremonium strictum, Alternaria wie Alternaria tenuis oder Alternaria alternata, Aspergillus wie Aspergillus niger oder Aspergillus brasiliensis, Candida wie Candida albicans, Chaetomium wie Chaetomium globosum, Fusarium wie Fusarium solani, Geotrichum wie Geotrichum candidum, Lentinus wie Lentinus tigrinus, Penicillium wie Penicillium glaucum oder Penicillium pinophilum, Rhodotorula wie Rhodotorula rubra oder Rhodotorula mucilaginosa, Stachybotrys wie Stachybotrys chartarum, Trichoderma wie Trichoderma virens.

Die erfindungsgemäßen Mischungen können als Komponente c) zusätzlich entweder keinen, einen oder mehrere weitere biozide Wirkstoffe enthalten. Beispielsweise können diese weiteren biozidenen Wirkstoffen ausgewählt sein aus der Gruppe bestehend aus Bronopol, Benzylhemiformal, Trimethylen-2-methylisothiazolinon-3-on, N-Methyl-benzisothiazolinon, 2-n-Octylisothiazolin-3-on, Tetramethylolacetylendiharnstoff (TMAD), 1,3-Bis(hydroxymethyl)-5,5-dimethylimidazolidine-2,4-dion (DMDMH), p-Chlor-m-kresol, Dimethylolharnstoff, 1,2-Dibrom-2,4-dicyanobutan, 2,2-Dibrom-3-nitrilopropionsäureamid, Glutardialdehyd, Ethylenglykolhemiformal, Ethylenglykol-bis-hemiformal, N-Methylol-harnstoff, Thiabendazol, Carbendazim, Zink-Pyrithion, Natrium-Pyrithion, 2-Phenoxyethanol, Phenoxypropanol, o-Phenylphenol, Chlorophen und quartären Ammoniumsalzen, wie z. B. N-Alkyl-N,N-dimethyl-benzyl-ammoniumchlorid sowie mit den eingangs genannten Einschränkungen CMIT.

Die Anwendungskonzentrationen der erfindungsgemäßen Mittel und das Verhältnis der Komponenten (a) und (b) und den gegebenenfalls enthaltenen, weiteren Wirkstoffen richtet sich nach der Art und dem Vorkommen der zu bekämpfenden Mikroorganismen, der mikrobiellen Ausgangsbelastung, sowie nach der Zusammensetzung des zu schützenden Materials. Die optimale Einsatzmenge für eine bestimmte Anwendung kann vor dem Praxiseinsatz durch Testreihen im Labor in einer dem Fachmann hinlänglich bekannten Weise einfach ermittelt werden.

Weiterhin sind von der Erfindung auch die mit den erfindungsgemäßen Mittel behandelten technischen Materialien umfasst.

Im Allgemeinen sind in Summe 2 bis 50,000 ppm der Komponenten (a) und (b), bevorzugt 5 bis 5,000 ppm, besonders bevorzugt 10 bis 2,000 ppm und besonders bevorzugt 200 bis 1,000 ppm im technischen Material zur Konservierung enthalten. Von der Erfindung sind daher auch technische Materialien umfasst, die mit erfindungsgemäßem Mittel behandelt wurden, bzw in einer anderen Ausführungsform die vorgenannten Mengen der Komponenten (a) und (b) enthalten.

In den erfindungsgemäßen Mitteln kann die Summe aus den Komponenten (a) und (b) in einem breiten Bereich variiert werden. Im allgemeinen beträgt die Summe der Komponenten (a) und (b) 1 bis 80 Gew.%, bevorzugt 2 bis 70 Gew.% und besonders bevorzugt 4 bis 50 Gew.% bezogen auf das Gesamtgewicht den erfindungsgemäßen Mittel.

Der Anteil an gegebenenfalls in den erfindungsgemäßen Mitteln eingesetzten, weiteren Wirkstoffen als Komponente (c) kann in einem weiten Bereich variieren und hängt stark von der Natur des Wirkstoffes und dem zu schützenden Medium ab. Im Allgemeinen kann er zwischen 0,2 und 20 Gew-%, bevorzugt zwischen 0,5 und 10 Gew-% und besonders bevorzugt zwischen 0,5 und 5 Gew-% bezogen auf das Gesamtgewicht der Konzentrate oder Formulierungen liegen.

In weiteren Aspekten umfasst die Erfindung die jeweils unabhängige Verwendung von MIT oder BIT oder N-Alkylguanidiniumsalze zur Herstellung der erfindungsgemäßen Mittel oder technischen Materialien.

Die Anwendung der erfindungsgemäßen Mittel kann, in Abhängigkeit von ihren jeweiligen physikalischen und/oder chemischen Eigenschaften, entweder separat in Form einer Zudosierung der Einzelwirkstoffe zum zu schützenden technischen Material erfolgen, wobei je nach den Erfordernissen des zu lösenden Konservierungsproblems eine individuelle Einstellung des Konzentrationsverhältnisses vorgenommen werden kann, oder es kann die Zudosierung eines fertigen biozidenen Mittels enthaltend die Komponenten (a) und (b) erfolgen.

Die Formulierung der erfindungsgemäßen Mittel ist beliebig und kann beispielsweise in Form von Lösungen, Emulsionen, Suspensionen, Pulvern, Schäumen, Pasten, Granulaten, Aerosolen und Mikroverkapselungen in polymeren Stoffen erfolgen.

Die erfindungsgemäßen Mittel können daher jeweils weiterhin enthalten oder auch nicht:

- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.

- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.

- Emulgatoren, wie beispielsweise Natrium-, Kalium-und Ammoniumsalze von gradkettigen aliphatischen Carbonsäuren der Kettenlänge $C_{12}$-$C_{20}$, Natriumhydroxyoctadecansulfonat, Natrium-, Kalium-und Ammoniumsalze von Hydroxyfettsäuren der Kettenlänge $C_{12}$-$C_{20}$ und deren Sulfierungs-bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

- Dispergiermittel, wie beispielsweise Alkylphenolpolyglycolether.

- Stabilisatoren, wie z.B. Cellulose und Cellulosederivate.

- Haftmittel und Verdicker, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie mineralische oder pflanzliche Öle.

- Spreitmittel, wie beispielsweise Isopropylmyristat, Polyoxyethylennonylphenylether und Polyoxyethylenlaurylphenylether.

- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon.

- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink.

- Entstaubungsmittel, wie beispielsweise Polyglykole und Polyglykolether. Die zumindest im Wesentlichen festen Formulierungen können dabei beispielsweise jeweils 0,01 bis 2, vorzugsweise 0,05 bis 1, besonders bevorzugt 0,1 bis 0,5 Gew.-% an Entstaubungsmitteln enthalten.

- Puffersubstanzen, Puffersysteme oder pH-Wert-Regulatoren. Die zumindest im Wesentlichen festen Formulierungen können dabei beispielsweise jeweils 0,01 bis 10, vorzugsweise 0,1 bis 5, Gew.-% an Puffersubstanzen, Puffersystemen oder pH-Wert-Regulatoren enthalten.

- Feste Trägerstoffe wie beispielsweise natürliche Gesteinsmehle, wie Kaoline, Tonerden, Talkum, Kreide, Quarz, Attapulgit, Montmorillonit oder Diatomeenerde sowie synthetische Gesteinsmehle, wie hochdisperse Kieselsäure, Aluminiumoxid und Silikate;
  Als feste Trägerstoffe insbesondere für Granulate sind beispielsweise geeignet: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengen;

- Wasser

Der besondere Vorteil der Erfindung liegt in der Bereitstellung ungewöhnlich stark wirksamer, überwiegendst synergistischer biozider Mittel mit einem breiten Wirkungssprektrum und hoher Wirkgeschwindigkeit, die gegenüber Kombinationen von BIT und MIT allein deutlich erhöht sind.

## Beispiele

Das Wachstum von Bakterien und Pilzen bei der Zugabe verschiedener biozider Mischungen wurde überprüft. Die Konzentration, bei der kein Wachstum detektiert wird, wird als minimale Hemmkonzentration (MHK) angegeben. Die Vorkultivierung der Bakterien, die in den Test eingesetzt wurden, erfolgte auf Trypton-Soja-Agar. Die Vorkultivierung der Pilze, die in den Test eingesetzt wurden, erfolgte auf Malzextrakt-Agar. Die Überprüfung des Wachstums in den MHK-Tests erfolgte in Trypton-Soja-Bouillion (Bakterien) bzw. Malzextrakt-Bouillion (Pilze). Die Organismen wurden bei 26 °C und einer relativen Luftfeuchte von 70 bis 80 % inkubiert. Die Bakterien wurden nach 4 Tage, die Pilze nach 7 Tage ausgewertet.

Der synergistische Index (SI) wurde nach der von Kull et al. (F.C. Kull et al., Applied Microbiology 9 (1961), 538 - 541) beschriebenen Methode bestimmt.

Dabei gilt folgende Beziehung: SI = QA/ Qa + QB/ Qb

$$ Qa \times \frac{MHK(A+B)}{MHK(A)} \oplus Qb \times \frac{MHK(A+B)}{MHK(B)} = SI $$

$Q_a$ = Anteil von Substanz A
$Q_b$ = Anteil von Substanz B
MHK(A) = Konzentration von Substanz A, die das Keimwachstum unterbindet
MHK(B) = Konzentration von Substanz B, die das Keimwachstum unterbindet
MHK(A+B) = Konzentration von A+B, die das Keimwachstum unterbindet
Wenn SI einen Wert von über 1 aufweist, bedeutet dies, dass ein Antagonismus vorliegt.
Wenn SI den Wert 1 annimmt, bedeutet dies, dass eine Addition der Wirkung gegeben ist.
Wenn SI von unter 1 annimmt, bedeutet dies, dass ein Synergismus besteht.

## Beispiel 1

Die Wirkung einer Wirkstoffkombination von BIT und MIT im Gewichtsverhältnis von 1:1 und variierenden Mengen an Dodecylguanidin Hydrochlorid (DGH, Angaben beziehen sich ebenfalls auf Gewichtsverhältnisse) wurde getestet.
Angegeben sind in

Tabelle 1: Die MHK-Werte für verschiedene Bakterien
Tabelle 2: Die Synergieindices berechnet für die Ergebnisse gemäß Tabelle 1
Tabelle 3: Die MHK-Werte für verschiedene Pilze
Tabelle 4: Die Synergieindices berechnet für die Ergebnisse gemäß Tabelle 3

Tabelle 1:

| Stamm | BIT:MIT (1:1) | 1 : 1 | 2 : 3 | 1 : 4 | 1 : 9 | DGH |
|---|---|---|---|---|---|---|
| *Bacillus subtilis* | 10 | 5 | 5 | 2.5 | 5 | 5 |
| *Citrobacter freundii* | 25 | 10 | 10 | 5 | 10 | 10 |
| *Corynebacterium ammoniagenes* | 62.5 | 5 | 5 | 2.5 | 5 | 5 |
| *Enterococcus hirae* | 25 | 5 | 5 | 1.75 | 5 | 5 |
| *Pseudomonas aeruginosa* | 25 | 25 | 25 | 25 | 25 | 50 |
| *Staphylococcus aureus* | 25 | 2.5 | 1 | 1 | 2.5 | 2.5 |

Tabelle 2:

| Stamm | 1 : 1 | 2 : 3 | 1 : 4 | 1 : 9 |
|---|---|---|---|---|
| *Bacillus subtilis* | 0.75 | 0.80 | 0.45 | 0.95 |
| *Citrobacter freundii* | 0.70 | 0.76 | 0.44 | 0.94 |
| *Corynebacterium ammoniagenes* | 0.54 | 0.63 | 0.41 | 0.91 |
| *Enterococcus hirae* | 0.60 | 0.68 | 0.29 | 0.92 |
| *Pseudomonas aeruginosa* | 0.75 | 0.70 | 0.60 | 0.55 |
| *Staphylococcus aureus* | 0.55 | 0.26 | 0.33 | 0.91 |

Tabelle 3:

| Stamm | BIT:MIT (1:1) | 9 : 1 | 4 : 1 | 1 : 1 | 2 : 3 | 1 : 4 | 1 : 9 | DGH |
|---|---|---|---|---|---|---|---|---|
| *Acremonium strictum* | 25 | 10 | 7.5 | 2.5 | 1 | 1 | 2.5 | 5 |
| *Alternaria alternata* | 25 | 10 | 7.5 | 7.5 | 2.5 | 2.5 | 5 | 5 |
| *Candida albicans* | 50 | 25 | 25 | 25 | 25 | 10 | 25 | 25 |
| *Fusarium solani* | 62.5 | 37.5 | 37.5 | 37.5 | 25 | 37.5 | 37.5 | 50 |
| *Geotrichum candidum* | 50 | 37.5 | 25 | 25 | 25 | 10 | 25 | 25 |
| *Penicillium pinophilum* | 175 | 50 | 50 | 17.5 | 10 | 10 | 17.5 | 17.5 |
| *Rhodotorula mucilaginosa* | 50 | 25 | 25 | 25 | 25 | 10 | 25 | 25 |
| *Stachybotrys chartarum* | 50 | 50 | 25 | 25 | 25 | 10 | 25 | 25 |
| *Trichoderma virens* | 175 | 25 | 37.5 | 25 | 25 | 25 | 10 | 37.5 |

Tabelle 4:

| Stamm | 9 : 1 | 4 : 1 | 1 : 1 | 2 : 3 | 1 : 4 | 1 : 9 |
|---|---|---|---|---|---|---|
| *Acremonium strictum* | 0.56 | 0.54 | 0.30 | 0.14 | 0.17 | 0.46 |
| *Alternaria alternata* | 0.56 | 0.54 | 0.90 | 0.34 | 0.42 | 0.92 |
| *Candida albicans* | 0.55 | 0.60 | 0.75 | 0.80 | 0.36 | 0.95 |

(fortgesetzt)

| Stamm | 9 : 1 | 4 : 1 | 1 : 1 | 2 : 3 | 1 : 4 | 1 : 9 |
|-------|-------|-------|-------|-------|-------|-------|
| *Fusarium solani* | 0.62 | 0.63 | 0.68 | 0.46 | 0.72 | 0.74 |
| *Geotrichum candidum* | 0.83 | 0.60 | 0.75 | 0.80 | 0.36 | 0.95 |
| *Penicillium pinophilum* | 0.54 | 0.80 | 0.55 | 0.37 | 0.47 | 0.91 |
| *Rhodotorula mucilaginosa* | 0.55 | 0.60 | 0.75 | 0.80 | 0.36 | 0.95 |
| *Stachybotrys chartarum* | 1.10 | 0.60 | 0.75 | 0.80 | 0.36 | 0.95 |
| *Trichoderma virens* | 0.20 | 0.37 | 0.40 | 0.46 | 0.56 | 0.92 |

**Beispiel 2**

Die Wirkung einer Wirkstoffkombination von BIT und MIT im Gewichtsverhältnis von 1:2 und variierenden Mengen an Dodecylguanidin Hydrochlorid (DGH, Angaben beziehen sich ebenfalls auf Gewichtsverhältnisse) wurde getestet.

Angegeben sind in

Tabelle 5: Die MHK-Werte für verschiedene Bakterien

Tabelle 6: Die Synergieindices berechnet für die Ergebnisse gemäß Tabelle 5

Tabelle 7: Die MHK-Werte und Synergieindices für verschiedene Bakterien

Tabelle 8: Die MHK-Werte für verschiedene Pilze

Tabelle 9: Die Synergieindices berechnet für die Ergebnisse gemäß Tabelle 8

Tabelle 10: Die MHK-Werte und Synergieindices für verschiedene Pilze

Tabelle 5:

| Stamm | BIT:MIT (1:2) | 3:2 | 1 : 1 | 1 : 4 | 1 : 9 | DGH |
|-------|---------------|-----|-------|-------|-------|-----|
| *Corynebakterium ammoniagenes* | 25 | 5 | 5 | 5 | 2.5 | 5 |
| *Enterobacter aerogenes* | 37.5 | 10 | 10 | 10 | 10 | 10 |
| *Enterococcus hirae* | 25 | 5 | 5 | 5 | 3.75 | 5 |
| *Proteus hauseri* | 10 | 5 | 5 | 10 | 10 | 10 |

Tabelle 6

| Stamm | 3 : 2 | 1 : 1 | 1 : 4 | 1 : 9 |
|-------|-------|-------|-------|-------|
| *Corynebacterium ammoniagenes* | 0.52 | 0.60 | 0.84 | 0.46 |
| *Enterobacter aerogenes* | 0.56 | 0.63 | 0.85 | 0.93 |
| *Enterococcus hirae* | 0.52 | 0.60 | 0.84 | 0.69 |
| *Proteus hauseri* | 0.50 | 0.50 | 1.00 | 1.00 |

Tabelle 7

| Stamm | MHK [ppm] | | | SI |
|-------|-----------|---|---|-----|
| | BIT / MIT (1 : 2) | (BIT / MIT (1 : 2)): DGH (4 : 1) | DGH | |
| *Alcaligenes faecalis* | 5 | 5 | 10 | 0.90 |
| *Bacillus subtilis* | 10 | 5 | 2.5 | 0.80 |
| *Citrobacter freundii* | 17.5 | 10 | 5 | 0.86 |
| *Staphylococcus aureus* | 25 | 2.5 | 1 | 0.58 |

Tabelle 8

| Stamm | BIT:MIT (1:2) | 9 : 1 | 4 : 1 | 3 : 2 | 1 : 1 | 2 : 3 | 1 : 4 | DGH |
|---|---|---|---|---|---|---|---|---|
| *Acremonium strictum* | 25 | 10 | 5 | 2.5 | 2.5 | 2.5 | 2.5 | 2.5 |
| *Alternaria alternata* | 37.5 | 10 | 5 | 5 | 5 | 5 | 5 | 5 |
| *Aspergillus brasiliensis* | 250 | 75 | 75 | 82.5 | 25 | 50 | 37.5 | 37.5 |
| *Aureobasidium pullulans* | 25 | 17.5 | 10 | 5 | 5 | 5 | 5 | 5 |
| *Candida albicans* | 50 | 25 | 25 | 25 | 25 | 25 | 25 | 25 |
| *Chaetomium globosum* | 250 | 75 | 50 | 50 | 50 | * | 25 | 25 |
| *Fusarium solani* | 50 | 25 | 25 | 17.5 | 10 | 25 | 25 | 25 |
| *Rhodotorula mucilaginosa* | 50 | 25 | 25 | 10 | 10 | 10 | 25 | 25 |
| *Trichoderma virens* | 250 | 50 | 50 | 50 | 25 | 25 | 25 | 25 |
| * nicht bestimmt | | | | | | | | |

Tabelle 9

| Stamm | 9 : 1 | 4 : 1 | 3 : 2 | 1 : 1 | 2 : 3 | 1 :4 |
|---|---|---|---|---|---|---|
| *Acremonium strictum* | 0.76 | 0.56 | 0.46 | 0.55 | 0.64 | 0.82 |
| *Alternaria alternata* | 0.44 | 0.31 | 0.48 | 0.57 | 0.65 | 0.83 |
| *Aspergillus brasiliensis* | 0.47 | 0.64 | 1.08 | 0.38 | 0.88 | 0.83 |
| *Aureobasidium pullulans* | 0.98 | 0.72 | 0.52 | 0.60 | 0.68 | 0.84 |
| *Candida albicans* | 0.55 | 0.60 | 0.70 | 0.75 | 0.80 | 0.90 |
| *Chaetomium globosum* | 0.57 | 0.56 | 0.92 | 1.10 | * | 0.82 |
| *Fusarium solani* | 0.55 | 0.60 | 0.49 | 0.30 | 0.80 | 0.90 |
| *Rhodotorula mucilaginosa* | 0.55 | 0.60 | 0.28 | 0.30 | 0.32 | 0.90 |
| *Trichoderma virens* | 0.38 | 0.56 | 0.92 | 0.55 | 0.64 | 0.82 |
| * nicht bestimmt | | | | | | |

Tabelle 10

| Stamm | MHK [ppm] | | | SI |
|---|---|---|---|---|
| | BIT / MIT (1 : 2) | DHG | (BIT / MIT (1 : 2)) : DGH (1 : 1) | |
| *Stachybotrys chartarum* | 50 | 7.5 | 10 | 0.77 |
| *Paecilomyces formosus* | 10 | 5 | 7.5 | 0.79 |
| *Geotrichum candidum* | 50 | 10 | 10 | 0.60 |
| *Penicillium pinophilum* | 75 | 7.5 | 10 | 0.73 |

Die obigen Tabellen 1-10 zeigen deutlich, dass für erfindungsgemäße Dreiermischungen aus BIT, MIT und DGH in verschiedenen Mischungsverhältnissen ein ausgeprägter Synergismus gegen verschiedene Bakterien und Pilze vorhanden ist.

**Beispiel 3**

Die Wirkung einer Wirkstoffkombination von BIT und Dodecylguanidin Hydrochlorid (DGH, Angaben beziehen sich ebenfalls auf Gewichtsverhältnisse) in verschiedenen Gewichtsverhältnissen wurde getestet.

Angegeben sind in

Tabelle 11: Die MHK-Werte und Synergieindices für verschiedene Pilze bei einem Gewichtsverhältnis BIT zu DGH von 3:2
Tabelle 12: Die MHK-Werte und Synergieindices für verschiedene Bakterien
Tabelle 13: Die Synergieindices berechnet für die Ergebnisse gemäß Tabelle 12
Tabelle 14: Die MHK-Werte und Synergieindices für *Staphylococcus aureus* bei verschiedenen Gewichtsverhältnissen BIT zu DGH
Tabelle 15: Die MHK-Werte und Synergieindices für verschiedene Pilze
Tabelle 16: Die Synergieindices berechnet für die Ergebnisse gemäß Tabelle 15
Tabelle 17: Die MHK-Werte und Synergieindices für *Candida albicans* bei verschiedenen Gewichtsverhältnissen BIT zu DGH

Tabelle 11

| Stamm | MHK [ppm] | | | SI |
|---|---|---|---|---|
| | BIT | BIT : DGH (3 : 2) | DGH | |
| *Alcaligenes faecalis* | 2.5 | 2.5 | 10 | 0.70 |
| *Bacillus subtilis* | 5 | 2.5 | 3.75 | 0.56 |
| *Citrobacter freundii* | 10 | 5 | 5 | 0.70 |
| *Corynebacterium ammoniagenes* | 37.5 | 2.5 | 2.5 | 0.44 |
| *Enterobacter aerogenes* | 25 | 10 | 10 | 0.64 |
| *Enterococcus hirae* | 10 | 2.5 | 2.5 | 0.55 |
| *Proteus hauseri* | 7.5 | 5 | 10 | 0.60 |
| *Pseudomonas aeruginosa* | 50 | 25 | 25 | 0.70 |
| *Pseudomonas stutzeri* | 10 | 5 | 5 | 0.70 |
| *Salmonella enterica* | 10 | 5 | 10 | 0.50 |

Tabelle 12

| Stamm | BIT | 1 : 1 | 1 : 4 | 1 : 9 | DGH |
|---|---|---|---|---|---|
| *Bacillus subtilis* | 5 | 3.75 | 2.5 | 2.5 | 3.75 |
| *Enterobacter aerogenes* | 25 | 10 | 10 | 10 | 10 |
| *Proteus hauseri* | 7.5 | 7.5 | 5 | 7.5 | 10 |
| *Pseudomonas aeruginosa* | 50 | 25 | 25 | 25 | 25 |

Tabelle 13

| Stamm | 1 : 1 | 1 : 4 | 1 : 9 |
|---|---|---|---|
| *Bacillus subtilis* | 0.88 | 0.63 | 0.64 |
| *Enterobacter aerogenes* | 0.70 | 0.88 | 0.94 |
| *Proteus hauseri* | 0.88 | 0.53 | 0.78 |
| *Pseudomonas aeruginosa* | 0.75 | 0.90 | 0.95 |

Tabelle 14

| Wirkstoff | Mischungsverhältnis | MHK [ppm] | SI |
|-----------|---------------------|-----------|------|
| BIT | | 5 | |
| BIT : DGH | 3:2 | 1 | 0.52 |
| BIT : DGH | 1 : 1 | 1 | 0.60 |
| BIT : DGH | 2 : 3 | 0.1 | 0.07 |
| DGH | | 1 | |

Tabelle 15

| | BIT | 9 : 1 | 4 : 1 | 3 : 2 | 1 : 1 | 2 : 3 | 1 : 4 | 1 : 9 | DGH |
|---|---|---|---|---|---|---|---|---|---|
| *Acremanium strictum* | 17.5 | 7.5 | 10 | 1.75 | 3.75 | 5 | 5 | 5 | 7.5 |
| *Aureobasidium pullulans* | 25 | 10 | 10 | 5 | 5 | 5 | 7.5 | 7.5 | 10 |
| *Chaetomium globosum* | 100 | 75 | 37.5 | 17.5 | 37.5 | 37.5 | 25 | 25 | 37.5 |
| *Fusarium solani* | 37.5 | 37.5 | 10 | 5 | 10 | 10 | 17.5 | 10 | 25 |
| *Geotrichum candidum* | 25 | 10 | 10 | 5 | 10 | 10 | 10 | 10 | 10 |
| *Penicillium pinophilum* | 37.5 | 17.5 | 10 | 5 | 5 | 7.5 | 5 | 5 | 5 |
| *Rhodotorula mucilaginosa* | 25 | 25 | 10 | 5 | 10 | 10 | 10 | 10 | 25 |
| *Trichoderma virens* | 87.5 | 37.5 | 25 | 17.5 | 25 | 25 | 37.5 | 25 | 37.5 |

Tabelle 16:

| | 9 : 1 | 4 : 1 | 3 : 2 | 1 : 1 | 2 : 3 | 1 : 4 | 1 : 9 |
|---|---|---|---|---|---|---|---|
| *Acremonium strictum* | 0.49 | 0.72 | 0.16 | 0.36 | 0.51 | 0.59 | 0.63 |
| *Aureobasidium pullulans* | 0.46 | 0.52 | 0.32 | 0.35 | 0.38 | 0.66 | 0.71 |
| *Chaetomium globosum* | 0.88 | 0.50 | 0.29 | 0.69 | 0.75 | 0.58 | 0.63 |
| *Fusarium solani* | 1.05 | 0.29 | 0.16 | 0.33 | 0.35 | 0.65 | 0.39 |
| *Geotrichum candidum* | 0.46 | 0.52 | 0.32 | 0.70 | 0.76 | 0.88 | 0.94 |
| *Penicillium pinophilum* | 0.77 | 0.61 | 0.48 | 0.57 | 0.98 | 0.83 | 0.91 |
| *Rhodotorula mucilaginosa* | 1.00 | 0.40 | 0.20 | 0.40 | 0.40 | 0.40 | 0.40 |
| *Trichoderma virens* | 0.49 | 0.36 | 0.31 | 0.48 | 0.51 | 0.89 | 0.63 |

Tabelle 17:

| | BIT | 9 : 1 | 4 : 1 | 3 : 2 | 1 : 1 | 2 : 3 | DGH |
|---|---|---|---|---|---|---|---|
| MHK [ppm] | 25 | 10 | 10 | 5 | 10 | 10 | 25 |
| SI | | 0.40 | 0.40 | 0.20 | 0.40 | 0.40 | |

Die obigen Tabellen 11-17 zeigen deutlich, dass für erfindungsgemäße Zweiermischungen aus BIT und DGH in verschiedenen Mischungsverhältnissen ein ausgeprägter Synergismus gegen verschiedene Bakterien und Pilze vorhanden ist.

**Beispiel 4**

Die Wirkung einer Wirkstoffkombination von MIT und Dodecylguanidin Hydrochlorid (DGH, Angaben beziehen sich ebenfalls auf Gewichtsverhältnisse) in verschiedenen Gewichtsverhältnissen wurde getestet.

Angegeben sind in

Tabelle 18:    Die MHK-Werte und Synergieindices für verschiedene Bakterien bei einem Gewichtsverhältnis MIT zu DGH von 9:1
Tabelle 19:    Die MHK-Werte und Synergieindices für *Escherichia coli*
Tabelle 20:    Die MHK-Werte und Synergieindices für verschiedene Pilze
Tabelle 21:    Die Synergieindices berechnet für die Ergebnisse gemäß Tabelle 20
Tabelle 22:    Die MHK-Werte und Synergieindices für *Alternaria alternata* bei verschiedenen Gewichtsverhältnissen MIT zu DGH
Tabelle 23:    Die MHK-Werte und Synergieindices für *Stachybotrys chartarum* bei verschiedenen Gewichtsverhältnissen MIT zu DGH

Tabelle 18:

| Stamm | MIT | 9 : 1 | DGH | SI |
|---|---|---|---|---|
| *Bacillus subtilis* | 25 | 10 | 2.5 | 0,76 |
| *Salmonella enterica* | 17.5 | 10 | 10 | 0,61 |
| *Staphylococcus aureus* | 50 | 5 | 1 | 0,59 |

Tabelle 19

| | MIT | 3 : 2 | 1 : 4 | 1 : 9 | DGH |
|---|---|---|---|---|---|
| MHK [ppm] | 25 | 7.5 | 5 | 2.5 | 5 |
| SI | | 0.78 | 0.84 | 0.46 | |

Tabelle 20

| Stamm | MIT | 9 : 1 | 4 : 1 | 3 : 2 | 1 : 4 | DGH |
|---|---|---|---|---|---|---|
| *Aspergillus brasiliensis* | 1000 | 175 | 62.5 | 50 | * | 25 |
| *Candida albicans* | 250 | 50 | 50 | 25 | 25 | 25 |
| *Chaetomium globosum* | 500 | 62.5 | 50 | 50 | 25 | 25 |
| *Fusarium solani* | 250 | 50 | 50 | 25 | 25 | 25 |
| *Rhodotorula mucilaginosa* | 250 | 50 | 25 | 25 | 25 | 25 |
| *Trichoderma virens* | 750 | 62.5 | 62.5 | 37.5 | 25 | 25 |
| *nicht bestimmt | | | | | | |

Tabelle 21

| Stamm | 9 : 1 | 4 : 1 | 3 : 2 | 1 : 4 |
|---|---|---|---|---|
| *Aspergillus brasiliensis* | 0.86 | 0.55 | 0.83 | * |
| *Candida albicans* | 0.38 | 0.56 | 0.46 | 0.82 |
| *Chaetomium globosum* | 0.36 | 0.48 | 0.86 | 0.81 |
| *Fusarium solani* | 0.38 | 0.56 | 0.46 | 0.82 |

(fortgesetzt)

| Stamm | 9 : 1 | 4 : 1 | 3 : 2 | 1 : 4 |
|---|---|---|---|---|
| *Rhodotorula mucilaginosa* | 0.38 | 0.28 | 0.46 | 0.82 |
| *Trichoderma virens* | 0.33 | 0.57 | 0.63 | 0.81 |
| *nicht bestimmt | | | | |

Tabelle 22

| | MIT | 9 : 1 | 4 : 1 | 3 : 2 | 2 : 3 | 1 : 4 | 1 : 9 | DGH |
|---|---|---|---|---|---|---|---|---|
| MHK [ppm] | 100 | 25 | 25 | 5 | 10 | 10 | 5 | 10 |
| SI | | 0.48 | 0.70 | 0.23 | 0.64 | 0.82 | 0.46 | |

Tabelle 23

| | MIT | 9 : 1 | 4 : 1 | DGH |
|---|---|---|---|---|
| MHK [ppm] | 250 | 50 | 25 | 10 |
| SI | | 0.68 | 0.58 | |

Die obigen Tabellen 18-23 zeigen deutlich, dass für erfindungsgemäße Zweiermischungen aus MIT und DGH in verschiedenen Mischungsverhältnissen ein ausgeprägter Synergismus gegen verschiedene Bakterien und Pilze vorhanden ist.

**Beispiel 5: Mikrobiologischer Belastungstest**

Mit einem mikrobiologischen Belastungstest wurde die Anfälligkeit wasserbasierter Systeme gegen mikrobiellen Befall und die Wirkung von Konservierungsmitteln überprüft. Hierzu wurden die Konservierungsmittel in definierten Konzentrationen in die wasserbasierten Systeme eingearbeitet. Zur Simulierung praxisnaher Bedingungen wurden die Proben nach Einarbeitung der jeweiligen Biozidprodukte in den angegebenen Konzentrationen für 3 Tage bei 60 °C einer thermischen Belastung ausgesetzt, um labile Wirkstoffbestandteile in den Biozidprodukten bereits in dieser Phase des Versuchs durch anschließende Unwirksamkeit zu identifizieren. Danach erfolgte über einen Versuchszeitraum von 6 Wochen eine Kontamination mit Mikroorganismen wie unten angegeben im wöchentlichen Abstand, so dass nach jeder Kontamination ca. $10^6$ - $10^7$ Bakterien pro/g enthalten sind. 3 und 7 Tage nach jeder Kontamination wurde durch Keimzahlbestimmung festgestellt, ob vollständige Abtötung (= 0 Bakterien pro/g) oder zumindest Vermehrungshemmung (auf $10^5$ - $10^1$ Bakterien pro/g) der eingebrachten Mikroorganismen im Vergleich zu den nicht konservierten Kontrollproben eingetreten ist.

Als wasserbasiertes System wurde eine Aufschlämmung von Calciumcarbonat (Calciumcarbonatslurry) mit einem Feststoffanteil von 75 Gew.-% durchgeführt. Als Mikroorganismen wurden für den Versuch folgende Bakterienarten in Mischung eingesetzt:

Pseudomonas aeruginosa, Pseudomonas fluorescens, Pseudomonas oleovorans,
Pseudomonas rubescens, Pseudomonas stutzeri, Alcaligenes faecalis, Citrobacter freundii, Corynebacterium sp..

Eine sehr gute Wirksamkeit wird erreicht, wenn die konservierten Proben eine vollständige Abtötung (= 0 Bakterien pro/g) der eingebrachten Mikroorganismen bewirken (3= sehr gut). Eine gute Wirkung liegt dann vor, wenn im Vergleich zur unkonservierten Probe ein stark reduziertes Mikrobenniveau beobachtet wird (auf $10^3$ - $10^1$ Bakterien pro/g)

Eine mäßige Wirkung liegt dann vor, wenn im Vergleich zur unkonservierten Probe ein leicht reduziertes Mikrobenniveau beobachtet wird.( auf $10^4$ - $10^3$ Bakterien pro/g). Eine mangelhafte Wirkung liegt dann vor, wenn im Vergleich zur unkonservierten Probe keine oder eine nur geringfügige Reduktion des Mikrobenniveaus beobachtet wird.( auf $10^7$-$10^5$ Bakterien pro/g).

Die erzielten Ergebnisse sind in Tabelle 24 angegeben.

Tabelle 24

| Dosierung der Biozidgemische | Woche 1 | Woche 2 | Woche 3 | Woche 4 | Woche 5 | Woche 6 |
|---|---|---|---|---|---|---|
| BIT / MIT (je 2,5%) | | | | | | |
| 500 ppm | 2 | 1 | 1 | 1 | 0 | 0 |
| 750 ppm | 3 | 2 | 1 | 1 | 0 | 0 |
| 1000 ppm | 3 | 3 | 2 | 1 | 0 | 0 |
| 500 ppm + 100 ppm DGH | 3 | 3 | 3 | 3 | 2 | 2 |
| 500 ppm: Zugabe von 0,05 % eines flüssigen Gemischs von BIT (2,5%) und MIT (2,5%) zur fertigen Calciumcarbonatslurry | | | | | | |

**Beurteilung der Konservierung**

0 = mangelhaft ($10^7$ - $10^5$ Bakterien pro/g)

1 = mäßig ($10^4$ - $10^3$ Bakterien pro/g)
2 = gut ($10^3$ - $10^1$ Bakterien pro/g)
3= sehr gut (0 Bakterien pro/g)
Wie obiger Tabelle zu entnehmen ist, kann durch Zugabe von DGH die Wirkung von aus dem Stand der Technik bekannten Mischungen vion BIT und MIT verstärkt werden und es resultieren antimikrobiell, insbesondere antibakteriell widerstandsfähigere Suspensionen, Dispersionen oder Aufschlämmungen von Mineralien, Füllstoffen oder Pigmenten.

**Patentansprüche**

**1.**  Biozide Mittel, enthaltend

(a) zumindest ein Isothiazolinon aus der Gruppe bestehend aus 1,2-Benzisothiazolin-3-on und 2-Methyl-4-isothiazolin-3-on
und
(b) zumindest ein N-Alkyl-Guanidiniumsalz,
wobei, sofern die biozide Mittel als Komponente (a) nur 2-Methyl-4-isothiazolin-3-on enthält, die biozide Mittel weiterhin entweder

• kein 5-Chlor-2-methyl-4-isothiazolin-3-on enthält oder
• 5-Chlor-2-methyl-4-isothiazolin-3-on enthält, wobei dann das Gewichtsverhältnis von 2-Methyl-4-isothiazolin-3-on zu 5-Chlor-2-methyl-4-isothiazolin-3-on mindestens 0,35: 1, vorzugsweise mindestens 1:1, wie beispielsweise 1:1 bis 1000:1, besonders bevorzugt mindestens 2:1, wie beispielsweise 2:1 bis 1000:1, ganz besonders bevorzugt mindestens 10:1, wie beispielsweise 10:1 bis 1000:1und noch weiter bevorzugt mindestens 50:1, wie bespielsweise 50:1 bis 1000:1 beträgt.

**2.**  Biozide Mittel nach Anspruch 1, **dadurch gekennzeichnet dass** sie 1,2-Benzisothiazolin-3-on und 2-Methyl-4-isothiazolin-3-on enthalten.

**3.**  Biozide Mittel nach Anspruch 1 oder 2, **dadurch gekennzeichnet dass** sie als zumindest ein N-Alkyl-Guanidiniumsalz solche der Formel (I) enthalten,

$$[H_2N\text{-}(C=NH_2)\text{-}NH\text{-}R]^+ \ X^- \qquad (I)$$

in der R für einen $C_8$-$C_{18}$ Alkylrest und $X^-$ für ein monovalentes Anion oder 1/p Äquivalente eines p-valenten Anions steht, wobei p für eine natürliche Zahl von 2 oder mehr steht.

**4.**  Biozide Mittel nach Anspruch 3, **dadurch gekennzeichnet, dass** in Formel (I) R für n-Dodecyl steht.

**5.** Biozide Mittel nach einem der Ansprüche 1 bis 4, **dadurch gekennzeichnet, dass** das Gewichtserhältnis der Komponenten (a) und (b) zueinander 10:1 bis 1:10 vorzugsweise 5:1 bis 1:5 und besonders bevorzugt 2:1 bis 1:5 beträgt.

**6.** Biozide Mittel nach einem der Ansprüche 2 bis 5, **dadurch gekennzeichnet, dass** das Gewichtserhältnis von BIT und MIT 1:100 bis 100:1, vorzugsweise 3:1 bis 1:3 und besonders bevorzugt 1,5:1 bis 1:2,5 beträgt.

**7.** Biozide Mittel nach einem der Ansprüche 1 bis 6, **dadurch gekennzeichnet, dass** die Summe aus den Komponenten (a) und (b) 1 bis 80 Gew.%, bevorzugt 2 bis 70 Gew.% und besonders bevorzugt 4 bis 50 Gew.% bezogen auf das Gesamtgewicht des biozides Mittels beträgt.

**8.** Biozide Mittel nach einem der Ansprüche 1 bis 7, **dadurch gekennzeichnet, dass** sie als Komponente c) zusätzlich entweder keinen, einen oder mehrere weitere biozide Wirkstoffe enthalten, die vorzugsweise ausgewählt sind aus der Gruppe bestehend aus Bronopol, Benzylhemiformal, Trimethylen-2-methylisothiazolinon-3-on, N-Methyl-benzisothiazolinon, 2-n-Octylisothiazolin-3-on, Tetramethylolacetylendiharnstoff (TMAD), 1,3-Bis(hydroxymethyl)-5,5-dimethylimidazolidine-2,4-dion (DMDMH), p-Chlor-m-kresol, Dimethylolharnstoff, 1,2-Dibrom-2,4-dicyanobutan, 2,2-Dibrom-3-nitrilopropionsäureamid, Glutardialdehyd, Ethylenglykolhemiformal, Ethylenglykol-bis-hemiformal, N-Methylol-harnstoff, Thiabendazol, Carbendazim, Zink-Pyrithion, Natrium-Pyrithion, 2- Phenoxyethanol, Phenoxypropanol, o-Phenyl-phenol, Chlorophen und quartären Ammoniumsalzen, wie z. B. N-Alkyl-N,N-dimethyl-benzyl-ammoniumchlorid sowie CMIT.

**9.** Biozide Mittel nach Anspruch 8, **dadurch gekennzeichnet, dass** sie 0,2 und 20 Gew-%, bevorzugt zwischen 0,5 und 10 Gew-% und besonders bevorzugt zwischen 0,5 und 5 Gew-% der Komponente c) bezogen auf das Gesamtgewicht des biozides Mittels enthalten.

**10.** Biozide Mittel nach einem der Ansprüche 1 bis 9, **dadurch gekennzeichnet, dass** sie in Form von Lösungen, Emulsionen, Suspensionen, Pulvern, Schäumen, Pasten, Granulaten, Aerosolen und Mikroverkapselungen in polymeren Stoffen vorliegen.

**11.** Biozide Mittel nach einem der Ansprüche 1 bis 10, **dadurch gekennzeichnet, dass** sie jeweils unabhängig voneinander weiterhin enthalten oder jeweils nicht: Grenzflächenaktive Stoffe, Benetzungsmittel, Emulgatoren, Dispergiermittel, Stabilisatoren, Haftmittel und Verdicker, Spreitmittel, Organische Lösungsmittel, Duftstoffe und Farbstoffe, Puffersubstanzen, Puffersysteme oder pH-Wert-Regulatoren, Feste Trägerstoffe, Wasser.

**12.** Technische Materialien enthaltend ein biozides Mittel nach einem der Ansprüche 1 bis 11.

**13.** Technische Materialien nach Anspruch 12, **dadurch gekennzeichnet, dass** es sich um folgende handelt:

- Beschichtungsmittel, wie Anstrichmittel, Farben, Putze
- Stärkelösungen und -slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.
- Bauchemische Produkte wie Betonadditive beispielsweise auf Basis von Melasse, Ligninsulfonat oder Polyacrylaten, Bituimenemulsionen oder Fugendichtungsmassen
- Leime oder Klebstoffe auf Basis der bekannten tierischen, pflanzlichen oder synthetischen Rohstoffe
- Polymerdispersionen auf Basis von z.B. Polyacrylat, Polystyrolacrylat, Styrolbutadien, Polyvinylacetat u.a.
- Detergentien und Reinigungsmittel für den technischen und Haushaltsbedarf
- Mineralöle und Mineralölprodukte wie z.B. Dieselkraftstoffe)
- Kühlschmierstoffe zur Metallverarbeitung auf Basis von Mineralöl-haltigen, halbsynthetischen oder synthetischen Konzentraten
- Hilfsmittel für die Leder-, Textil- oder photochemische Industrie
- Vor- und Zwischenprodukte der chemischen Industrie, z.B. bei der Farbstoff-produktion und -lagerung
- Tinten oder Tuschen
- Wachs und Tonemulsionen

**14.** Verfahren zum Schutz technischer Materialien vor Befall mit und/oder Zerstörung durch oder Bekämpfung von Mikroorganismen, **dadurch gekennzeichnet, dass** das technische Material mit zumindest einem biozides Mittel

nach einem der Ansprüche 1 bis 11 in Kontakt gebracht wird.

15. Verwendung von 1,2-Benzisothiazolin-3-on oder 2-Methyl-4-isothiazolin-3-on oder N-Alkyl-Guanidiniumsalzen zur Herstellung der bioziden Mittel nach einem der Ansprüche 1 bis 11 oder der technischen Materialien nach Anspruch 12 oder 13.

**Europäisches Patentamt**
**European Patent Office**
**Office européen des brevets**

## EUROPÄISCHER RECHERCHENBERICHT

Nummer der Anmeldung

EP 13 18 2078

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | US 4 661 503 A (MARTIN CYNTHIA H [US] ET AL) 28. April 1987 (1987-04-28) * das ganze Dokument * ----- | 1-15 | INV. A01N43/80 A01N47/44 A01P1/00 A01P3/00 |
| Y,D | WO 99/08530 A1 (THOR CHEMIE GMBH [DE]; ANTONI ZIMMERMANN DAGMAR [DE]; BAUM RUEDIGER [D] 25. Februar 1999 (1999-02-25) * das ganze Dokument * ----- | 1-15 | |

**RECHERCHIERTE SACHGEBIETE (IPC)**

A01N

Der vorliegende Recherchenbericht wurde für alle Patentansprüche erstellt

| Recherchenort | Abschlußdatum der Recherche | Prüfer |
|---|---|---|
| München | 27. Januar 2014 | Götz, Gerhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 18 2078

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2014

| Im Recherchenbericht angeführtes Patentdokument | Datum der Veröffentlichung | Mitglied(er) der Patentfamilie | | Datum der Veröffentlichung |
|---|---|---|---|---|
| US 4661503 A | 28-04-1987 | AU | 573133 B2 | 26-05-1988 |
| | | AU | 7429687 A | 07-01-1988 |
| | | US | 4661503 A | 28-04-1987 |
| WO 9908530 A1 | 25-02-1999 | AT | 227082 T | 15-11-2002 |
| | | AU | 731655 B2 | 05-04-2001 |
| | | AU | 9345398 A | 08-03-1999 |
| | | BR | 9811955 A | 15-08-2000 |
| | | CA | 2299227 A1 | 25-02-1999 |
| | | CN | 1267192 A | 20-09-2000 |
| | | CZ | 20000539 A3 | 14-06-2000 |
| | | DE | 59806209 D1 | 12-12-2002 |
| | | DK | 1005271 T3 | 10-03-2003 |
| | | EP | 0900525 A1 | 10-03-1999 |
| | | EP | 1005271 A1 | 07-06-2000 |
| | | ES | 2188013 T3 | 16-06-2003 |
| | | HU | 0003297 A2 | 29-01-2001 |
| | | JP | 3992433 B2 | 17-10-2007 |
| | | JP | 2001515016 A | 18-09-2001 |
| | | KR | 20010023049 A | 26-03-2001 |
| | | MX | 212024 B | 11-12-2002 |
| | | NO | 20000749 A | 18-04-2000 |
| | | PL | 338711 A1 | 20-11-2000 |
| | | PT | 1005271 E | 31-03-2003 |
| | | TR | 200000437 T2 | 21-08-2000 |
| | | US | 6361788 B1 | 26-03-2002 |
| | | WO | 9908530 A1 | 25-02-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4661503 A

- EP 1005271 A1

**In der Beschreibung aufgeführte Nicht-Patentliteratur**

- **F.C. KULL et al.** *Applied Microbiology,* 1961, vol. 9, 538-541